# EUROPÄISCHE PATENTSCHRIFT

(11) **EP 3 135 824 B1**
(45) Veröffentlichungstag und Bekanntmachung des Hinweises auf die Patenterteilung: **14.11.2018**
(21) Anmeldenummer: 16186947.4
(22) Anmeldetag: 22.07.2013
(51) Int. Cl.: E02F 9/08, B62D 25/10, B66C 13/52, B60R 3/00

(54) **OBERWAGEN FÜR EINE BAUMASCHINE**
UPPER STRUCTURE FOR A CONSTRUCTION MACHINE
TOURELLE POUR UN ENGIN

(43) Veröffentlichungstag der Anmeldung: 01.03.2017
(62) Teilanmeldung aus: 13177451.5
(73) Patentinhaber: BAUER Maschinen GmbH, 86529 Schrobenhausen (DE)
(72) Erfinder: ROTH, Stefan, 86529 Sandizell (DE); LANZL, Martin, 85051 Ingolstadt (DE); OEHME, Ralf, 85053 Ingolstadt (DE); KOHL, Mathias, 85302 Strobenried (DE)
(74) Vertreter: Wunderlich & Heim Patentanwälte Partnerschaftsgesellschaft mbB

(56) Entgegenhaltungen:
- EP-A1- 2 216 238
- EP-A1- 2 299 008
- WO-A1-2010/037185
- DE-A1- 10 253 542
- FR-A- 389 868
- SU-A1- 546 555
- SU-A1- 1 532 367

## Beschreibung

Die Erfindung betrifft einen Oberwagen für eine Baumaschine mit einem Gehäuse, welches Seitenwände aufweist, wobei zum Zugang in das Gehäuse mindestens eine Gehäuseöffnung mit einer Zugangswand vorgesehen ist, welche mittels eines Verstellmechanismus in eine Öffnungsposition verstellbar ist, und in einem Bereich vor der Gehäuseöffnung ein horizontaler Laufsteg gebildet ist.

Derartige Oberwagen werden beispielsweise bei Erdbohrgeräten oder anderen Erdbearbeitungsmaschinen eingesetzt. Diese Baumaschinen weisen üblicherweise ein Fahrwerk, insbesondere ein Raupenfahrwerk, als Unterwagen auf, auf welchem ein Oberwagen fest oder drehbar angeordnet ist. Der Oberwagen kann somit einen erheblichen Abstand zur Bodenoberfläche aufweisen. Abhängig von der Größe des Unterwagens kann dieser üblicherweise 1 bis 2 m und auch mehr betragen. Im Oberwagen sind in der Regel die Antriebsaggregate angeordnet, etwa ein Dieselmotor, Hydraulikpumpen, ein Stromgenerator oder weitere Antriebe für Winden. Zu Wartungs- und Reparaturzwecken ist daher ein guter und sicherer Zugang in das Gehäuse des Oberwagens erforderlich.

Aus der DE 10 2009 050 189 A1 ist eine Baumaschine mit einem Oberwagen bekannt, bei welchem Gehäuseteile nach oben aufklappbar sind. Ein seitlicher Laufsteg mit Absturzsicherung ist fest entlang der Flanken des Gehäuses angeordnet. Derartige fest angeordnete Laufstege verringern aber entweder den Bauraum in dem Gehäuse oder vergrößern die Außenmaße der Baumaschine.

Ein Oberwagen mit einem ausklappbaren Laufsteg geht aus der JP 6-85148 A1 hervor. Der Laufsteg ist als ein Gitterrost ausgebildet, welcher außen an eine Seitenwand angelegt ist. Zum Aufbau des Laufsteges sind Stützen auszuschwenken und der Gitterrost ist nach unten zu klappen. Ein außenliegender Gitterrost beeinträchtigt das Erscheinungsbild des Oberwagens und ist zudem einer Verschmutzung ungeschützt ausgesetzt.

Aus der SU 546555 A1 ist ein Radfahrzeug mit einem gattungsgemäßen Oberwagen bekannt, bei welchem über verschiebbare Schienen, welche als Teleskopschienen bezeichnet werden können, eine Seitenwand horizontal ausziehbar ist. Nach dem Ausziehen kann eine vertikal gestellte Bodenplatte horizontal ausgeklappt werden.

Eine Baumaschine mit einem Raupenfahrwerk als Unterwagen und einem drehbar angebrachten Oberwagen geht etwa aus der EP 2 216 238 A1 hervor. Bei diesem Oberwagen sind vertikale Seitenwände über einen Verstellmechanismus vertikal nach oben fahrbar. Ein innenliegender geschützter Laufsteg kann dann in eine horizontale Position nach unten geklappt werden, um einen horizontalen Laufsteg zu bilden. Der Laufsteg kann erst nach der Öffnung der Zugangswand gebildet werden, was für die Handhabung sowie die Sicherheit des Bedienpersonals problematisch sein kann.

Der Erfindung liegt die **Aufgabe** zugrunde, einen Oberwagen anzugeben, welcher bei einem einfachen und kompakten Aufbau einen leichten und zugleich sicheren Aufbau eines Laufsteges ermöglicht.

Nach der Erfindung wird die Aufgabe durch einen Oberwagen mit den Merkmalen des Anspruchs 1 gelöst. Bevorzugte Ausführungsformen der Erfindung sind in den abhängigen Ansprüchen angegeben.

Bei dem erfindungsgemäßen Oberwagen ist mindestens ein Auszugselement vorgesehen, welches horizontal ausziehbar zwischen einer Einzugsposition und einer Auszugsposition gelagert ist, in welcher das Auszugselement
unter Bildung horizontal aus dem Gehäuse vorsteht, und dass zum Bilden des Laufsteges an dem Auszugselement eine Bodenplatte vorgesehen ist.

Eine Grundidee der Erfindung besteht darin, an zumindest einer der im Wesentlichen vertikalen Seitenwände ein horizontal ausziehbares Auszugselement vorzusehen. In der eingeschobenen Position ist das Auszugselement platzsparend im oder am Gehäuse gelagert. Ein horizontales Aus- oder Einschieben ist auch bei großen und schweren Auszugselementen mit relativ geringen Kräften zu bewirken. Dies kann motorisch oder manuell erfolgen. Das Auszugselement ist dabei so weit ausziehbar, dass ausreichend Raum für einen Laufsteg für das Bedienpersonal besteht.

Grundsätzlich kann zum horizontalen Verschieben des Auszugselementes ein beliebiger Verschiebemechanismus vorgesehen werden. Eine besonders einfache und robuste Anordnung wird nach der Erfindung dadurch erzielt, dass mindestens zwei Teleskopschienen vorgesehen sind, mit welchen das Auszugselement ausziehbar gelagert ist. Die zwei Teleskopschienen sind in den seitlichen Außenbereichen des Auszugselementes vorgesehen, so dass dieses ähnlich wie eine Schublade horizontal ausgezogen werden kann. Bei größeren Längen des Auszugselementes können auch in einem Mittenbereich eine oder mehrere Teleskopschienen vorgesehen sein. Eine Teleskopschiene umfasst vorzugsweise eine am Oberwagen befestigte Hohlschiene, in welcher eine innere Schiene axial verfahrbar gelagert ist. An der verfahrbaren Innenschiene ist das Auszugselement befestigt.

Nach der Erfindung weist das Auszugselement ein Seitenwandelement auf, welches einen Teil der Zugangswand bildet. In der horizontal ausgezogenen Öffnungsposition weist dieses Seitenwandelement weiterhin eine im Wesentlichen vertikale Position auf und kann so vorzugsweise eine Brüstung oder einen Teil der Brüstung als Absturzsicherung am Laufsteg bilden. Vorzugsweise ist das Seitenwandelement in der Einzugs- oder Verschlussposition außenliegend und bildet so einen Teil der äußeren Zugangswand, also der Seitenwand des Gehäuses. Das Seitenwandelement kann aber auch innenliegend angeordnet sein und von einem äußeren entfern- oder verstellbaren Außenwandelement der Zugangswand verdeckt sein.

Eine bevorzugte Ausführungsform der Erfindung ist weiterhin darin zu sehen, dass die Bodenplatte an oder auf den mindestens zwei Teleskopschienen gelagert ist. Die Teleskopschienen sind somit als Stützträger oder Stützrahmen für die Bodenplatte und damit den Laufsteg ausgebildet. Weitere oder zusätzliche Stützelemente sind bei dieser Ausführungsform nicht zwingend notwendig.

Nach einer weiteren Ausführungsform der Erfindung ist es bevorzugt, dass die Bodenplatte an den Teleskopschienen angebracht und mit dem Aufziehen des Auszugselements ausfahrbar ist. Die Bodenplatte ist vorzugsweise fest an den Teleskopschienen angeordnet und befindet sich auch in der Verschlussposition in horizontaler Anordnung im oder an dem Gehäuse. Durch Ausziehen des Auszugselementes wird so ein fertiger Laufsteg gebildet, wobei ein vertikal stehendes Seitenwandelement als eine Brüstung zur seitlichen Absturzsicherung dienen kann.

Eine kompakte Anordnung wird gemäß einer anderen Ausführungsform der Erfindung durch erreicht, dass die Bodenplatte nach dem Aufziehen des Auszugselementes an diesem anbringbar ist. Die Bodenplatte kann dabei als separates Teil an einer anderen Stelle gelagert werden, und wird erst bei ausgezogenem Auszugselement zur Schaffung des Laufsteges aufgelegt. Bevorzugt kann dabei die Bodenplatte etwa klappbar an einer Innenseite des Seitenwandelementes angeordnet sein. So kann die Bodenplatte in der Einzugsposition parallel zum Seitenwandelement vertikal gerichtet sein. In der ausgezogenen Position kann dann die Bodenplatte von dem Seitenwandelement weg in die horizontale Position auf die Teleskopschienen geklappt werden. Alternativ kann die Bodenplatte auch selbst als eine teleskopierbare Platte ausgebildet sein.

Die Zugangswand ist aus mehreren Wandelementen aufgebaut. Die einzelnen Wandelemente können nebeneinander zum Bilden einer mehrschichtigen Zugangswand hintereinander angeordnet sein. Es ist erfindungsgemäß, dass zum Bilden der Zugangswand oberhalb des Seitenwandelementes ein oberes Wandelement vorgesehen ist, welches zum Öffnen klappbar oder verschiebbar gelagert ist. Das obere Wandelement kann etwa vertikal nach oben schiebbar oder klappbar sein, um am Deckenbereich ein Brüstungselement zu bilden.

Nach der Erfindung ist es besonders vorteilhaft, dass das obere Wandelement in der Öffnungsposition ein Schutzdach über dem Laufsteg bildet. Hierzu kann das obere Wandelement an seiner Oberseite klappbar am Deckenbereich des Oberwagens angelenkt sein und so in eine schräge oder gefaltete Position nach oben bewegt und dort mit einem Verriegelungsmechanismus fixiert werden. Auf diese Weise kann bei geöffnetem Gehäuse durch den Laufsteg mit Brüstung und das Schutzdach ein gegenüber Witterungsverhältnissen besonders geschützter Arbeitsraum gebildet werden. Ein Verstellmechanismus für die Zugangswand umfasst also in diesem Fall das ausziehbare Auszugselement mit dem unteren Seitenwandteil und einen Klappmechanismus für das obere Wandteil.

Zur weiteren Erhöhung der Arbeitssicherheit ist es nach einer Ausführungsform der Erfindung vorteilhaft, dass an dem Laufsteg und/oder einem Deckenbereich des Gehäuses ein aufstellbares Brüstungselement vorgesehen ist. Das Brüstungselement
kann etwa an dem Seitenwandelement vorgesehen sein, um dieses gegebenenfalls zu erhöhen oder zusätzlich abzusichern. Auch kann das aufstellbare Brüstungselement an den Stirnseiten des Laufsteges vorgesehen sein. Das aufstellbare Brüstungselement kann einen Klapp- oder Schwenkmechanismus mit stangenförmigen Elementen oder ausziehbare Absperrseile oder Absperrketten aufweisen. Ein Brüstungselement am Deckenbereich kann den gebildeten Arbeitsraum zusätzlich schützen.

Sofern bei geöffneter Zugangswand die Gehäuseöffnung nicht unmittelbar an einer Fahrerkabine oder einen bestehenden Begehungsbereich des Oberwagens angrenzt, können ein oder mehrere weitere Auszugselemente vorgesehen sein. Dieses Auszugselement kann eine bloße verfahrbare Bodenplatte sein, welche zwischen einer Einzugsposition, in welcher der Auszugsboden in das Gehäuse eingefahren ist, und einer Auszugsposition verschiebbar ist. In der Auszugsposition kann der Auszugsboden an einen anderen gebildeten Laufsteg an der Gehäuseöffnung angrenzen. Es können ebenfalls aufstellbare und insbesondere ausklappbare Brüstungselemente vorgesehen sein.Selbstverständlich können bei Vorliegen eines Abstandsraumes zum Laufsteg auch auf andere Weise Bodenplatten ausgeklappt oder aufgelegt werden.

Die Erfindung umfasst weiterhin eine Baumaschine mit einem Oberwagen und einem Unterwagen, welcher als ein Fahrwerk ausgebildet ist, wobei die Baumaschine dadurch gekennzeichnet ist, dass der Oberwagen entsprechend der vorbeschriebenen Erfindung ausgebildet ist. Die Baumaschine ist insbesondere eine Baumaschine zum Tiefbau, insbesondere ein Erdbohrgerät, ein Rüttler oder eine Ramme, wie sie insbesondere für den Spezialtiefbau eingesetzt werden. Der Unterwagen kann mit Raupenketten oder Rädern versehen sein.

Nachfolgend wird die Erfindung anhand eines bevorzugten Ausführungsbeispieles weiter erläutert, welches schematisch in den beigefügten Zeichnungen dargestellt ist. In den Zeichnungen zeigen:
- Fig. 1: eine erste perspektivische Ansicht eines erfindungsgemäßen Oberwagens mit geschlossenen Zugangswänden;
- Fig. 2: eine weitere perspektivische Ansicht des Oberwagens nach Fig. 1 mit geschlossenen Zugangswänden;
- Fig. 3: eine perspektivische Ansicht des Oberwagens gemäß Fig. 1 mit geöffneten Zugangswänden;
- Fig. 4: eine perspektivische Ansicht des Oberwagens gemäß Fig. 2 mit geöffneten Zugangswänden; und
- Fig. 5: der Oberwagen gemäß Ansicht von Fig. 4 mit zusätzlich geöffneter Tür.

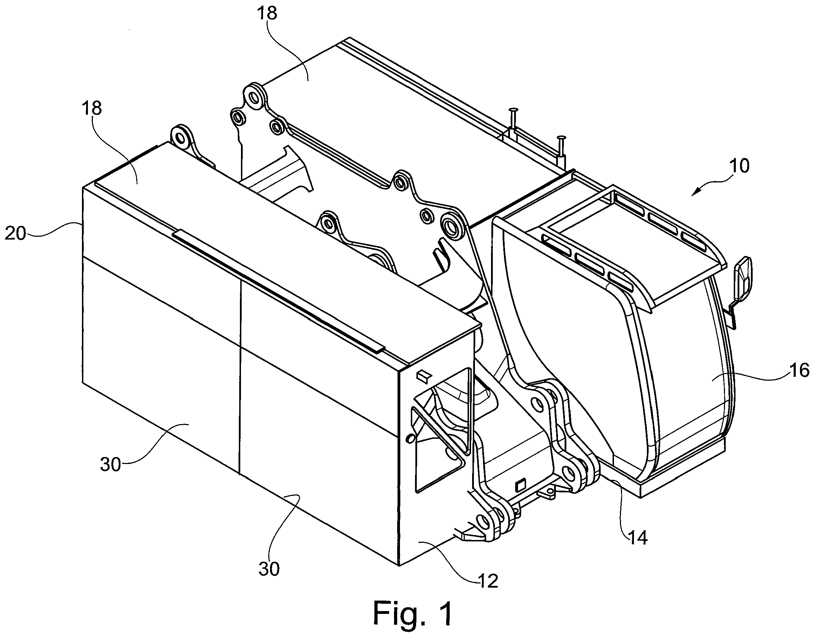

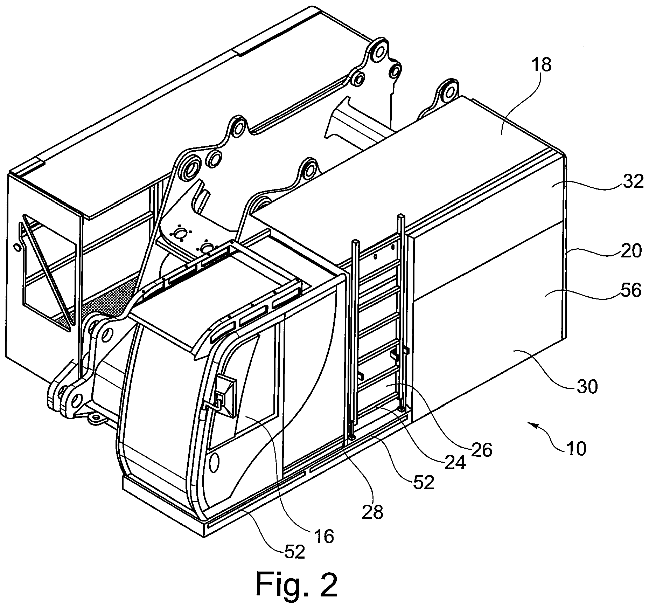

Ein erfindungsgemäßer Oberwagen 10 in einem geschlossenen Zustand, also mit geschlossenen Zugangswänden 30 ist in den Figuren 1 und 2 dargestellt. Der Oberwagen 10 umfasst ein kastenartiges Gehäuse 12, welches von einem Grundrahmen 14 getragen wird, Das kastenartige Gehäuse 12 umfasst Seitenwände 20, welche von einem Deckenbereich 18 oben geschlossen sind. Die Seitenwände 20 weisen zu öffnende Zugangswände 30 auf, welche nachfolgend näher erläutert werden.

An einer Vorderseite des Oberwagens 10 ist eine Fahrerkabine 16 angeordnet, wie es für verschiedenste Baumaschinen, insbesondere Erdbohrgeräte, bekannt ist.

Der dargestellte Oberwagen 10 ist weitgehend ohne Anbauelemente aus Gründen der Übersichtlichkeit dargestellt. In einem Mittenbereich des Gehäuses 12 können Seilwinden und ein Mast montiert werden. Innerhalb des Gehäuses 12 können verschiedenste Antriebs- und Steuerungskomponenten untergebracht werden, insbesondere ein Dieselantrieb, Hydraulikpumpen sowie ein wesentlicher Teil der Maschinensteuerung.

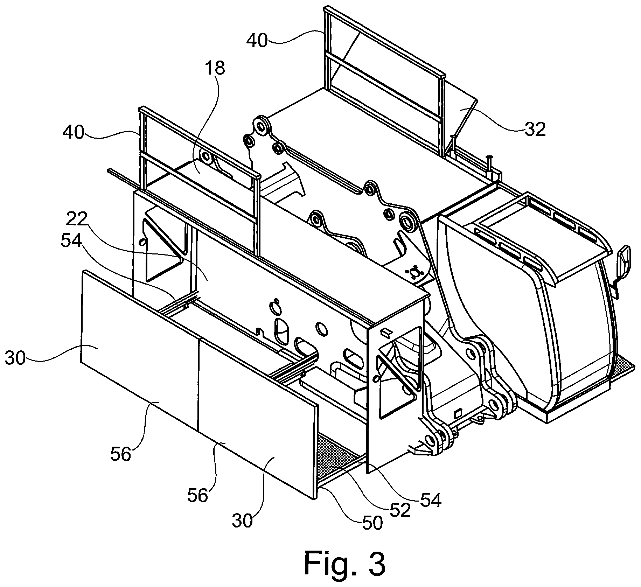

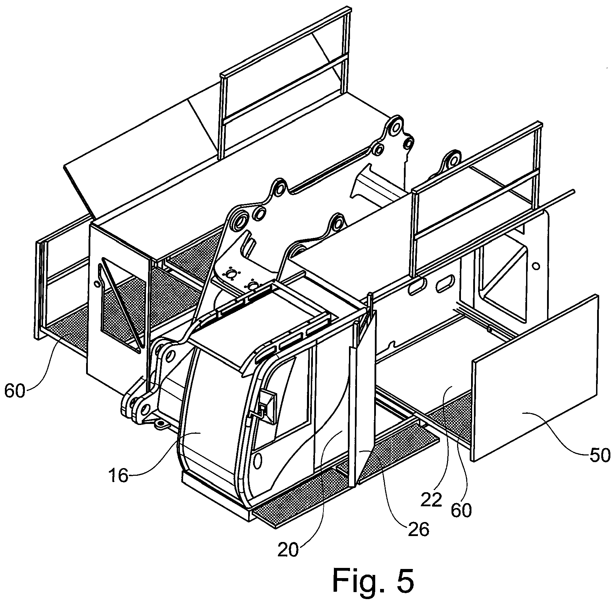

Der Oberwagen 10 wird auf einem Unterwagen, insbesondere einem Raupenfahrwerk angebracht. Aufgrund der erheblichen Größe derartiger Unterwägen an Baumaschinen ist der Zugang an das Gehäuse 12 von außen nicht ohne weiteres möglich. Die Zugangswände 30 können von einer in den Figuren 1 und 2 dargestellten Verschlussposition in eine Öffnungsposition gemäß den Figuren 3 bis 5 verstellt werden. Gemäß der Erfindung sind horizontal ausziehbare oder verschiebbare Auszugselemente 50 vorgesehen. Die Auszugselemente 50 weisen eine Bodenplatte 52 auf, welche bei den größeren Zugangswänden 30 mittels kugelgelagerter Teleskopschienen 54 zum horizontalen Verfahren vorgesehen sind. Ein horizontales Verfahren kann von Hand oder durch einen Stellmechanismus, welcher Spannfedern, einen Antriebsmotor oder einen Stellzylinder aufweisen kann, verfahren werden.

Durch Öffnen der Zugangswände 30 wird eine Gehäuseöffnung 22 am Gehäuse 12 bewirkt. Für einen sicheren Zugang zu der Gehäuseöffnung 22 weisen die im Wesentlichen vertikalen Zugangswände 30 ein unteres Seitenwandelement 56 auf, welches fest an den Teleskopschienen 54 angeordnet ist. An den Teleskopschienen 54 ist in dem dargestellten Ausführungsbeispiel auch jeweils eine gitterrostartige Bodenplatte 52 angeordnet. Bei dieser Ausführung wird gleichzeitig mit dem Öffnen des Gehäuses 12 durch Ausschieben des Seitenwandelementes 56 die Bodenplatte zum Bilden eines Laufsteges ausgefahren.

Ein oberes Wandelement 32 der Zugangswand 30 ist an einem Deckenbereich 18 schwenkbar gelagert, so dass dieses zum Vergrößern der Gehäuseöffnung 22 nach oben schwenkbar ist. Das obere Wandelement 32 kann vorzugsweise in einer schräggestellten Position fixiert werden, so dass das obere Wandelement 32 ein Schutzdach über den geöffneten Arbeitsraum am Gehäuse 12 bildet. Dies ist insbesondere bei schlechten Witterungsverhältnissen vorteilhaft.

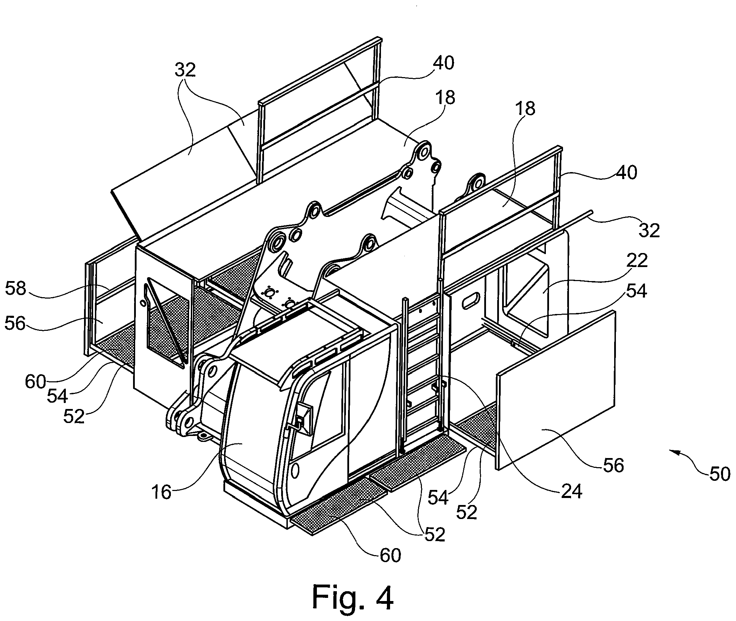

Das ausgezogene Seitenwandelement 56 bildet in der ausgezogenen Position gleichzeitig eine Brüstung. Hierzu kann, wie insbesondere aus Fig. 4 zu ersehen, an der Innenseite des Seitenwandelementes 56 ein Versteifungsrahmen 58 vorgesehen sein.

Als eine weitere Sicherungsmaßnahme kann am Deckenbereich 18 oberhalb der Gehäuseöffnung 22 ein ausklappbares oder aufstellbares Brüstungselement 18 aufgebaut werden. Das Brüstungselement 18 stellt sicher, dass insbesondere keine Personen in den geöffneten Arbeitsraum fallen.

Im Bereich der Fahrerkabine 16 sowie an einem Bereich mit einer Leiter 24 zum Deckenbereich 18 kann das Auszugselement 50 als einfach ausziehbare Bodenplatte 52 ausgebildet sein. Durch die so aneinandergrenzenden Bodenplatten 52 kann ein durchgehender Laufsteg 60 gebildet werden. Im Bereich der Leiter 24 kann eine Seitenwand 20 als ein Türelement 26 ausgebildet sein, welches um Scharniere 28 um eine vertikale Schwenkachse schwenkbar ist. Nach Abschluss der Wartungs- oder Bedienarbeiten können die Auszugselemente 50 ohne größeren Kraftaufwand motorisch oder manuell von der ausgezogenen Position wieder in die eingefahrene Position gemäß den Figuren 1 und 2 zurückgestellt werden. In dieser eingefahrenen Einzugsposition sind insbesondere die Bodenplatten 52 vor Verschmutzung oder Beschädigung geschützt.

## Patentansprüche

1. Oberwagen für eine Baumaschine mit einem kastenartigen Gehäuse (12), welches im Wesentlichen vertikale Seitenwände (20) aufweist, wobei zum Zugang in das Gehäuse (12) mindestens eine Gehäuseöffnung (22) mit einer Zugangswand (30) vorgesehen ist, welche mittels eines Verstellmechanismus in eine Öffnungsposition verstellbar ist, und in einem Bereich vor der Gehäuseöffnung (22) ein horizontaler Laufsteg (60) gebildet ist, wobei
- an zumindest einer Seitenwand (20) mindestens ein Auszugselement (50) vorgesehen ist, welches horizontal ausziehbar zwischen einer Einzugsposition und einer Auszugsposition gelagert ist, in welcher das Auszugselement (50) horizontal aus dem Gehäuse (12) vorsteht, und
- zum Bilden des Laufsteges (60) an dem Auszugselement (50) eine Bodenplatte (52) vorgesehen ist,
**dadurch gekennzeichnet,**
- **dass** die Zugangswand (30) aus mehreren Seitenwandelementen (32, 56) aufgebaut ist,
- **dass** das Auszugselement (50) ein erstes Seitenwandelement (56) aufweist, welches einen Teil der Zugangswand (30) bildet,
- **dass** zum Bilden der Zugangswand (30) oberhalb des ersten Seitenwandelementes (56) ein oberes zweites Seitenwandelement (32) vorgesehen ist, welches zum Öffnen etwa vertikal nach oben schiebbar oder klappbar gelagert ist, und
- **dass** durch das obere zweite Seitenwandelement (32) in der Öffnungsposition ein Schutzdach über dem Laufsteg (60) oder ein Brüstungselement am Deckenbereich (18) gebildet ist.

2. Oberwagen nach Anspruch 1,
**dadurch gekennzeichnet,**
**dass** zum horizontalen Verschieben mindestens zwei Teleskopschienen (54) vorgesehen sind.

3. Oberwagen nach Anspruch 1 oder 2,
**dadurch gekennzeichnet,**
**dass** die Bodenplatte (52) an den Teleskopschienen (54) angebracht und mit dem Aufziehen des Aufzugselementes (50) ausfahrbar ist.

4. Oberwagen nach Anspruch 1 oder 2,
**dadurch gekennzeichnet,**
**dass** die Bodenplatte (52) nach dem Aufziehen des Auszugselementes (50) an diesem anbringbar ist.

5. Oberwagen nach einem der Ansprüche 1 bis 4,
**dadurch gekennzeichnet,**
**dass** an dem Laufsteg (60) und/oder einem Deckenbereich (18) des Gehäuses (12) ein aufstellbares Brüstungselement (40) vorgesehen ist.

6. Oberwagen nach einem der Ansprüche 1 bis 5,
**dadurch gekennzeichnet,**
**dass** an dem Gehäuse (12) mehrere Auszugselemente (50) vorgesehen sind.

7. Baumaschine mit einem Oberwagen (10) und einem Unterwagen, welcher als ein Fahrwerk ausgebildet ist,
**dadurch gekennzeichnet,**
**dass** der Oberwagen (10) nach einem der Ansprüche 1 bis 6 ausgebildet ist.

8. Baumaschine nach Anspruch 7,
**dadurch gekennzeichnet,**
**dass** der Oberwagen (10) auf einem Unterwagen gelagert ist, welcher ein Raupenfahrwerk aufweist.

## Claims

1. Upper carriage for a construction machine with a box-like housing (12) having essentially vertical side walls (20), wherein for access to the housing (12) at least one housing opening (22) with an access wall (30) is provided, which is adjustable by means of an adjustment mechanism into an open position, and in an area in front of the housing opening (22) a horizontal gangway (60) is formed, wherein
- on at least one side wall (20) at least one pull-out element (50) is provided, which can be pulled out horizontally between a retracted position and a pulled out position, in which the pull-out element (50) projects horizontally from the housing (12), and
- in order to form the gangway (60) a base plate (52) is provided on the pull-out element (50),
**charcterized** in that
- the access wall (30) is built from several side wall elements (32, 56),
- in that the pull-out element (50) has a first side wall element (56) which forms a part of the access wall (30),
- in that in order to form the access wall (30) provision is made above the first side wall element (56) for an upper second side wall element (32) which, for example for opening, is slidably or foldably supported in vertical upward direction, and
- in that in the open position a protective roof is formed above the gangway (60) by the upper second wall element (32) or a railing element is formed on the ceiling area (18).

2. Upper carriage according to claim 1,
**characterized in that**
for horizontal displacement at least two telescopic rails (54) are provided.

3. Upper carriage according to claim 1 or 2,
**characterized in that**
the base plate (52) is attached to the telescopic rails (54) and can be moved out when the pull-out element (50) is being drawn out.

4. Upper carriage according to claim 1 or 2,
**characterized in that**
the base plate (52) can be attached to the pull-out element (50) after this has been drawn out.

5. Upper carriage according to any one of claims 1 to 4,
**characterized in that**
on the gangway (60) and/or a ceiling area (18) of the housing (12) a mountable railing element (40) is provided.

6. Upper carriage according to any one of claims 1 to 5,
**characterized in that**
on the housing (12) several pull-out elements (50) are provided.

7. Construction machine having an upper carriage (10) and an undercarriage which is designed as a running gear,
**characterized in that**
the upper carriage (10) is designed according to any one of claims 1 to 6.

8. Construction machine according to claim 1,
**characterized in that**
the upper carriage (10) is supported on an undercarriage which has a crawler chassis.

## Revendications

1. Tourelle pour un engin de construction avec une carcasse (12) de type boîte, lequel présente des parois latérales (20) sensiblement verticales, dans laquelle au moins une ouverture de carcasse (22) avec une paroi d'accès (30) est prévue pour accéder dans le carcasse (12), laquelle peut être ajustée au moyen d'un mécanisme d'ajustement dans une position d'ouverture, et une entretoise (60) horizontale est formée dans une zone devant l'ouverture de carcasse (22), dans laquelle
- au moins un élément d'extraction (50) est prévu au niveau d'au moins une paroi latérale (20), lequel est monté de manière à pouvoir être extrait horizontalement entre une position rentrée et une position sortie, dans laquelle l'élément d'extraction (50) fait saillie de manière horizontale hors du carcasse (12), et
- une plaque de fond (52) est prévue pour former l'entretoise (60) au niveau de l'élément d'extraction (50),
**caractérisée en ce**
- **que** la paroi d'accès (30) est créée à partir de plusieurs éléments de paroi latérale (32, 56),
- **que** l'élément d'extraction (50) présente un premier élément de paroi latérale (56), qui forme une partie de la paroi d'accès (30),
- **qu'**est prévu, pour former la paroi d'accès (30) au-dessus du premier élément de paroi latérale (56), un deuxième élément de paroi latérale (32) supérieur, qui est monté de manière à pouvoir être glissé ou rabattu à peu près verticalement vers le haut aux fins de l'ouverture, et
- **que**, dans la position d'ouverture, un toit de protection au-dessus de l'entretoise (60) ou un élément de parapet au niveau de la zone de recouvrement (18) est formé par le deuxième élément de paroi latérale (32) supérieur.

2. Tourelle selon la revendication 1,
**caractérisée en ce**
**qu'**au moins deux rails télescopiques (54) sont prévus aux fins d'un coulissement horizontal.

3. Tourelle selon la revendication 1 ou 2,
**caractérisée en ce**
**que** la plaque de fond (52) est installée au niveau des rails télescopiques (54) et peut être sortie avec l'extraction de l'élément d'extraction (50).

4. Tourelle selon la revendication 1 ou 2,
**caractérisée en ce**
**que** la plaque de fond (52) peut être installée après l'extraction de l'élément d'extraction (50) au niveau de ce dernier.

5. Tourelle selon l'une quelconque des revendications 1 à 4,
**caractérisée en ce**
**qu'**un élément de parapet (40) pouvant être ouvert est prévu au niveau de l'entretoise (60) et/ou d'une zone de recouvrement (18) du carcasse (12).

6. Tourelle selon l'une quelconque des revendications 1 à 5,
**caractérisée en ce**
**que** plusieurs éléments d'extraction (50) sont prévus au niveau du carcasse (12).

7. Engin de construction avec une tourelle (10) et un châssis, qui est réalisé sous la forme d'un mécanisme de déplacement,
**caractérisé en ce**
**que** la tourelle (10) est réalisée selon l'une quelconque des revendications 1 à 6.

8. Engin de construction selon la revendication 7,
**caractérisé en ce**
**que** la tourelle (10) est montée sur un châssis, qui présente un mécanisme de déplacement à chenilles.
